# EUROPEAN PATENT APPLICATION

(11) **EP 4 845 287 A1**
(43) Date of publication of application: **25.11.2026**
(21) Application number: 25177383.4
(22) Date of filing: 19.05.2025
(51) Int. Cl.: H04W 74/02, H04W 74/0833, H04W 84/12

(54) **A METHOD FOR PROTECTING SCHEDULED ACCESS TIME SLOTS IN A WIRELESS COMMUNICATION NETWORK**

(71) Applicant: Siemens Aktiengesellschaft, 80333 München (DE)
(72) Inventor: Mecklenburg, Ben, 85748 Garching (DE); Chorppath, Anil Kumar, 76437 Rastatt (DE); Mitsakis, Nikolaos, 81377 München (DE); Reisacher, Marco, 81669 München (DE)
(74) Representative: Siemens Patent Attorneys

(57) **Abstract**

The proposed embodiments relate to a method for protecting scheduled access time slots in a wireless communication network, which includes an access point and one or more stations. The network operates on a time-triggered communication schedule that alternates between scheduled access time slots for critical traffic and random access time slots for non-critical traffic. According to a proposed method a protection band within a scheduled access time slot is configured. This protection band defines a time interval during which transmissions of non-critical traffic are suppressed. Additionally, within a random access time slot, a Network Allocation Vector is activated at a first station in response to a transmission. This Network Allocation Vector imposes a timer that restricts the station from transmitting until the random access time slot concludes. If the first station is designated for non-critical traffic, the timer is extended by the protection band, ensuring that the Network Allocation Vector remains active into the subsequent scheduled access time slot. The proposed embodiments ensure that critical traffic may be transmitted without interruption during its designated time slots.

## Description

### Technical Field

The disclosed embodiments generally relate to the field of industrial wireless communication systems. More specifically, the disclosed embodiments pertain to mechanisms for enabling coordinated medium access among stations in Wi-Fi networks supporting deterministic and time-sensitive communication in mixed-criticality industrial environments.

### Background Art

Industrial communication protocols are employed to facilitate the control and monitoring of field devices and other process equipment within industrial automation environments. Historically, wired communication has been the preferred medium in such settings, primarily due to its ability to support deterministic protocols essential for the reliable exchange of time-critical process data. In recent years, however, advancements in wireless communication technologies have introduced new opportunities for industrial automation. Among these, Wi-Fi - defined by the IEEE 802.11 family of standards and widely adopted for local area networking - has gained increasing traction in industrial contexts. This trend is driven by the evolution of wireless protocols that are progressively capable of supporting the deterministic behavior required in industrial applications.

Nevertheless, conventional Wi-Fi was originally designed for consumer and enterprise environments, and as such, it lacks the inherent capabilities to meet the stringent timing, reliability, and predictability demands of industrial automation systems.

Industrial wireless communication systems often rely on proprietary, non-IEEE 802.11 compliant mechanisms such as polling-based or Time-Division Multiple Access (TDMA) schemes to ensure predictable channel access. These approaches, while effective in providing deterministic behavior, suffer from high implementation complexity and limited interoperability with standard Wi-Fi infrastructure.

Wi-Fi 6 introduces Orthogonal Frequency Division Multiple Access (OFDMA), which enables centralized, trigger-based uplink and downlink transmissions controlled by the Access Point (AP). This paradigm shift facilitates more efficient spectrum utilization and opens the door for hybrid scheduling schemes that combine scheduled access (SA) for critical traffic and random access (RA) for non-critical traffic.

However, a significant technical challenge arises in such mixed-criticality scheduling environments: the lack of a mechanism to prevent non-critical random access transmissions from overlapping into scheduled access time slots reserved for critical traffic.

Existing virtual carrier sensing mechanisms are not sufficiently able to incorporate awareness of time-triggered scheduling and are therefore insufficient to protect the temporal integrity of scheduled transmissions. As a result, random access transmissions may inadvertently encroach upon scheduled access slots.

An overlap of non-critical random access transmission into a scheduled access time slot reserved for critical traffic may result in unpredictable delays and potential loss of critical data, thereby undermining the reliability and determinism required in industrial applications. Accordingly, there is a need in the art for protecting scheduled access time slots in a wireless communication network in order to prevent non-critical transmissions from encroaching upon scheduled access slots.

### Summary of the Invention

The embodiments relate to a method for protecting scheduled access time slots in a wireless communication network including an access point (AP) and one or more stations (STA1, STA2), wherein
- the access point (AP) is at least temporarily occupying channel access for an Orthogonal Frequency Division Multiple Access transmission;
- the wireless communication network is operated according to a time-triggered communication schedule between the access point (AP) and the one or more stations (STA1, STA2), and;
- the time-triggered communication schedule comprises alternating scheduled access time slots (SAS) designated for transmission of critical traffic and random access time slots (RAS) designated for transmission of non-critical traffic;
the method including the steps of:
- configuring a protection band (PB) defining a time interval within one of the scheduled access time slot (SAS) during which transmissions of non-critical traffic are to be suppressed; and;
- activating, within one of the random access time slots (RAS), a Network Allocation Vector (RT-NAV) at a first station (STA1) in response to a transmission in the one or more stations (STA1, STA2), the Network Allocation Vector (RT-NAV) imposing a timer during which the first station (STA1) is restricted from transmitting traffic until the random access time slot (RAS) is concluded, wherein the timer of the Network Allocation Vector (RT-NAV) is extended by the protection band (PB) in a case where the first station (STA1) is designated for transmission of non-critical traffic, such that the Network Allocation Vector (RT-NAV) remains active into the subsequent scheduled access time slot (SAS).

The present embodiments improve the reliability and enhance the QoS (Quality of Service) of real-time communications in industrial and other time-sensitive applications, while maintaining full compatibility with the IEEE 802.11ax (Wi-Fi 6) standard. This ensures that the proposed embodiments may be seamlessly integrated into existing network infrastructures without requiring fundamental changes to the underlying protocol architecture.

### Brief Description of the Drawing

The objects as well as further advantages of the present invention will become more apparent and readily appreciated from the following description of the preferred embodiments, taken in conjunction with the accompanying drawing accompanying drawing of which:
- FIG. 1:: is a schematic diagram illustrating a temporal scheduling mechanism where a random access transmission encroaches upon a scheduled access slot;
- FIG. 2:: is a schematic diagram illustrating a temporal scheduling mechanism in which a protection band is introduced at the beginning of a scheduled access slot to prevent encroaching transmissions;
- FIG. 3:: is a schematic diagram illustrating a potential, yet insufficient, use of currently available timer mechanisms for protecting a scheduled access time slot; and;
- FIG. 4: is a schematic diagram illustrating a scheduling mechanism according to embodiments, including a proposed protection band to safeguard a scheduled access slot from encroaching non-critical transmissions.

### Description of Examples

Industrial applications impose stringent requirements on wireless communication systems, particularly with respect to deterministic behavior and real-time capability. Such applications may demand guaranteed channel access and predictable resource allocation to ensure a timely and reliable exchange of critical process data.

To meet these requirements, existing industrial wireless solutions may typically be based on polling-based mechanisms or Time-Division Multiple Access (TDMA) schemes. While effective in providing deterministic access, these approaches may be generally characterized by high implementation complexity and are often proprietary in nature, lacking compliance with the IEEE 802.11 family of standards.

The advent of Wi-Fi 6, based on the IEEE 802.11ax standard, introduces a significant paradigm shift in wireless medium access. Specifically, Wi-Fi 6 employs Orthogonal Frequency Division Multiple Access (OFDMA), which transitions the access model from a distributed contention-based approach to a centrally coordinated, trigger-based transmission scheme. In this architecture, the Access Point (AP) may assume control over both uplink and downlink transmissions by issuing Trigger Frames, thereby orchestrating communication in a manner that is inherently more structured and more suitable for time-sensitive applications. While for uplink transmissions using OFDMA, at least one Trigger Frame may be required to coordinate the transmission, for downlink transmissions using OFDMA, Trigger Frames may be optional, meaning the access point may initiate a downlink OFDMA transmission without issuing Trigger Frames.

In order to facilitate more efficient utilization of available communication resources, the applicant of the present application has previously disclosed a method entitled »Providing a Priority-Based Deterministic Channel Access in a Wireless Local Area Network«, as set forth in a patent application filed on 24 May 2024 with the European Patent Office under provisional filing number EP24177970.1, the contents of which are hereby incorporated by reference in their entirety. In that earlier application, a mechanism has been proposed for integrating scheduled access and random access time slots within a unified scheduling framework. According to this scheme, traffic classified as critical is assigned to Scheduled Access (SA) slots to ensure deterministic and time-sensitive transmission, whereas non-critical traffic is permitted to contend for channel access during Random Access (RA) slots. The allocation and timing of these respective access slots are dynamically configured based on the presence and communication requirements of critical and non-critical applications within the network.

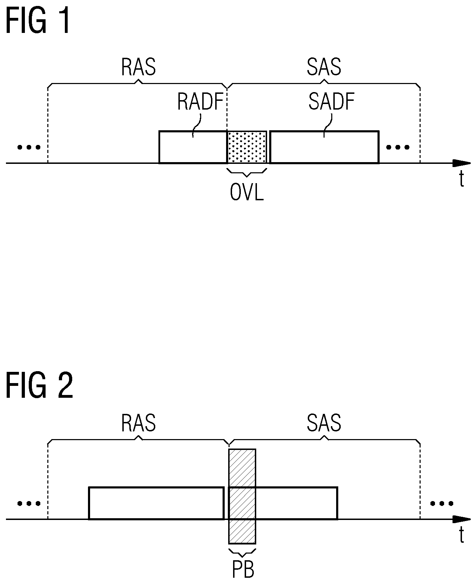

Referring now to FIG. 1, a technical challenge arising not only from the aforementioned scheduling approach, but also from general at least partially deterministic channel access approaches, is the absence of any guarantee that transmissions initiated during a random access slot RAS carrying opportunistic traffic such as a random access data frame RADF will not encroach upon the scheduled access slot SAS designated for critical traffic under control of the Orthogonal Frequency Division Multiple Access scheme. An unintended overlap OVL may compromise the timely and interference-free delivery of time-sensitive data. FIG. 1 illustrates a temporal diagram in which time t progresses from left to right. A random access slot RAS is immediately followed by a temporally adjacent scheduled access slot SAS. A random access data frame RADF, transmitted at the end of the random access slot RAS i, extends into the subsequent scheduled access slot SAS by a time interval OVL, thereby resulting in the unintended overlap OVL.

To address the aforementioned problem, the present embodiments propose an introduction of a protection Band, which may be enforced through a novel type of NAV or Network Allocation Vector according to a more specific embodiment, whereby the NAV may be referred to as a Real-Time Network Allocation Vector or RT-NAV. This mechanism according to proposed embodiments may enable stations to coordinate their transmission behavior in such a manner that transmissions initiated during random access slots RAS do not encroach upon the scheduled access slots SAS reserved for critical traffic.

As illustrated in FIG. 2, a protection band PB is positioned at the beginning of the scheduled access slot SAS and serves as a temporal buffer during which non-critical transmissions are suppressed, thereby safeguarding the integrity of scheduled communications. By employing this mechanism, an access point may flexibly schedule OFDMA-based transmissions - such as those described in the method entitled »Providing a Priority-Based Deterministic Channel Access in a Wireless Local Area Network«, as disclosed in the aforementioned prior patent application - alongside random access slots RAS allocated for OFDM-based transmissions. This hybrid scheduling approach enables a more efficient and adaptable medium access strategy within IEEE 802.11-compliant networks. In particular, it facilitates the coexistence of scheduled and contention-based traffic, thereby supporting the diverse timing and reliability requirements characteristic of industrial environments with mixed-criticality communication demands.

The proposed protection band mechanism may be advantageously coordinated with time synchronization between the access point and its associated stations. Such synchronization may be coordinated and/or utilized through established techniques, including Fine Timing Measurement (FTM) or the Precision Time Protocol (PTP) implemented over wireless links. Temporal alignment may ensure that participating stations are aware of the precise boundaries of scheduled access slots, thereby enabling accurate enforcement of the protection band and preventing unintended transmission overlaps.

Following this brief general introduction to the motivation underlying the embodiments and the solution proposed in accordance with the embodiments, the discussion will now proceed to a more detailed examination of the technical problem addressed thereby.

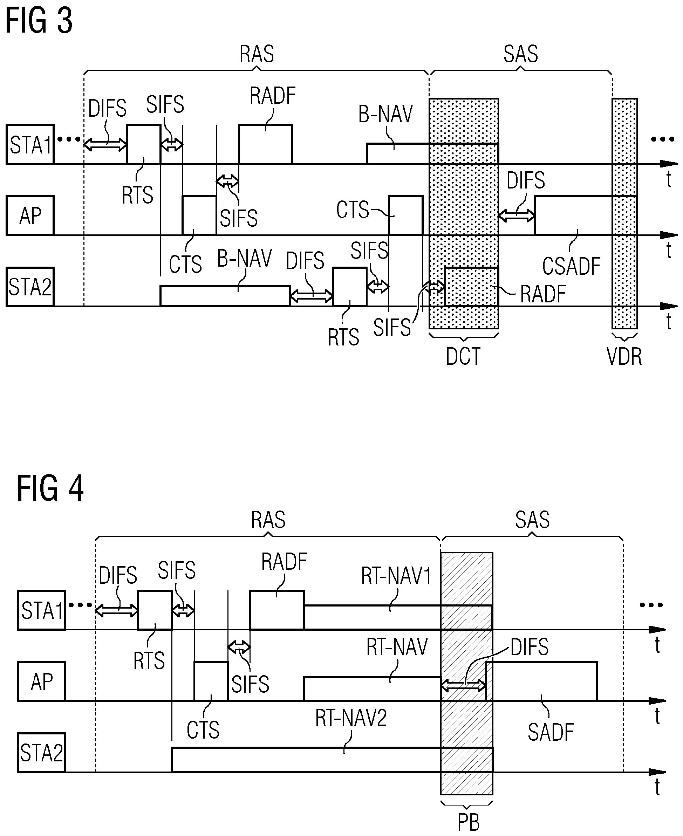

Turning now to FIG. 3, which presents a schematic illustration of a potential, yet ultimately inadequate, application of existing timer mechanisms for safeguarding a scheduled access time slot. Before examining the temporal sequence of FIG. 3 in detail, virtual carrier sensing mechanisms and interframe spacing mechanisms to regulate access to the shared communication medium and to prioritize different classes of transmissions shall be briefly introduced.

As is known in the art, Wi-Fi devices may employ two principal forms of carrier sensing to facilitate channel access: physical carrier sensing and virtual carrier sensing. In physical carrier sensing, a device may monitor the wireless medium to detect ongoing transmissions from other devices, thereby avoiding interference. In contrast, virtual carrier sensing relies on a Network Allocation Vector or NAV, which may serve as a temporal indicator estimating the duration of ongoing transmissions by enabling a station to infer channel occupancy based on control information embedded in received frames.

A NAV is a virtual carrier sensing mechanism used in IEEE 802.11-based wireless networks, including 802.11ax (Wi-Fi 6). The NAV operates as a timer-based construct, wherein a station, upon receiving a frame that includes duration information, sets an internal countdown timer corresponding to the expected occupancy of the channel. During the period in which the NAV is active, the station defers from attempting to access the medium, treating it as busy, even if no physical signal is detected, thereby reducing the likelihood of collision. This mechanism may allow stations to coordinate their transmission behavior without requiring continuous physical monitoring of the channel and helps avoid collisions and supports Carrier Sense Multiple Access with Collision Avoidance (CSMA/CA). A NAV timer may be particularly significant in environments where multiple stations contend for access to the medium, as it may allow for implicit coordination based on overheard control or data frames. In this regard, NAV may act as a virtual extension of the physical carrier sensing mechanism, complementing it by accounting for transmissions that may not be directly detectable due to signal attenuation or spatial separation.

With the advent of IEEE 802.11ax (Wi-Fi 6), the NAV concept has been extended to support more sophisticated access control in dense and overlapping network deployments. Specifically, two distinct NAV types have been introduced:
- a basic NAV B-NAV may be primarily intended to prevent stations other than the designated transmitter and receiver from accessing the medium, thereby mitigating the risk of collisions and ensuring uninterrupted data transmission; and;
- a Spatial Reuse NAV - not shown in FIG. 3 - which may be usually referred to as SR-NAV may be designed to enhance coordination of channel access among neighboring wireless local area networks, particularly in high-density deployment scenarios such as multi-tenant buildings, enterprise environments, or public venues with overlapping network coverage.

These NAV operate concurrently to enable more granular control over medium access. The Basic NAV continues to serve its traditional role of deferring access based on the duration field of received frames, while the SR-NAV facilitates spatial reuse by allowing stations to make localized decisions about medium availability, even in the presence of ongoing transmissions in neighboring networks. This dual-NAV architecture enhances spectral efficiency and enables more aggressive reuse of the wireless medium, particularly in high-density scenarios.

However, it is important to note that neither the Basic NAV nor the SR-NAV is inherently aware of time-triggered or scheduled access mechanisms. As such, while they provide robust support for contention-based access and spatial coordination, they do not offer sufficient protection for deterministic or scheduled transmissions, such as those required in industrial or time-sensitive networking environments. As a result, non-critical transmissions may encroach upon these scheduled intervals, leading to undesirable interference and significant delays in the delivery of critical data. This deficiency is exemplified in FIG. 3, wherein such scheduling conflicts are visually indicated by hatched regions of a delay of critical traffic DCT and violation of delay requirement VDR.

In wireless communication systems conforming to the IEEE 802.11 standard, interframe spacing mechanisms may be employed to regulate access to the shared communication medium and to prioritize different classes of transmissions. Among these mechanisms, a Short Interframe Space SIFS, a Point Coordination Function Interframe Space PIFS, and a Distributed Coordination Function Interframe Space DIFS may serve as temporal thresholds that determine the order and timing of medium access by various stations and other entities within the network.

The Short Interframe Space SIFS represents the minimum interframe interval and is utilized in scenarios where immediate response frames are required, such as acknowledgments (ACK), Requests to Send RTS, Clear to Send CTS responses, or data frame fragments within a single transmission exchange. By assigning the shortest possible deferral time to such responses, the Short Interframe Space SIFS may ensure that ongoing communication sequences are completed without interruption from other stations, thereby preserving the integrity of time-sensitive exchanges.

In contrast, the Point Coordination Function Interframe Space PIFS is defined as an interframe interval longer than SIFS but shorter than a Distributed Coordination Function Interframe Space DIFS further explained below. The Point Coordination Function Interframe Space PIFS is primarily employed by the access point AP to gain prioritized access to the medium. By deferring for a duration shorter than that required by stations, the access point AP is able to preempt contention-based transmissions and initiate centrally coordinated communication sequences, such as polling or contention-free bursts.

The Distributed Coordination Function Interframe Space DIFS constitutes the longest of the three interframe intervals and is used by stations operating under the Distributed Coordination Function or DCF, which is a default contention-based access mechanism in IEEE 802.11 networks. A station intending to transmit data may be required to first sense the medium to be idle for at least a Distributed Coordination Function Interframe Space DIFS duration before initiating the contention process. This ensures that any higher-priority transmissions - those governed by Short Interframe Space SIFS or Point Coordination Function Interframe Space PIFS - are given precedence, thereby maintaining a hierarchical structure of medium access that favors time-critical and centrally coordinated transmissions.

Collectively, Short Interframe Space SIFS, Point Coordination Function Interframe Space PIFS, and Distributed Coordination Function Interframe Space DIFS establish a tiered access framework that enables differentiated medium access based on transmission priority, ensuring orderly operation of the wireless network in both contention-based and centrally coordinated communication scenarios.

FIG. 3 depicts a timing diagram which may be employed or observed within a - not shown - wireless communication network wherein scheduled access and time slots have been established as described in the preceding exemplary embodiments of FIG. 1 and FIG. 2. This timing diagram shown in FIG. 3 may be employed or observed within a - not shown - wireless communication network wherein scheduled access and time slots have been established as described in the preceding exemplary embodiments of FIG. 1 and FIG. 2.

FIG. 3 shows a scenario wherein the first station STA1 may await the end of a Distributed Inter-Frame Space DIFS period to ensure channel availability before initiating its communication. Upon conclusion of the interframe interval of the Distributed Inter-Frame Space DIFS period, the first station STA1 may transmit a Request to Send frame RTS to the access point AP. The second station STA2, concurrently receiving this RTS frame in the shared wireless channel, immediately initiates - without any interframe space delay - an internal countdown with a temporal length corresponding to a basic Network Allocation Vector B-NAV. During the countdown period - corresponding to the length of a box symbolizing the basic Network Allocation Vector B-NAV in the drawing - in which the basic Network Allocation Vector B-NAV is active, the second station STA2 may usually refrain from initiating any transmission, thereby deferring to the ongoing communication and reducing the likelihood of collision.

On the access point AP side, following a Short Inter-Frame Space SIFS period, the access point AP responds with a Clear to Send CTS frame, thereby indicating channel reservation for the first station STA1. Upon receiving the Clear to Send CTS frame from the access point AP, the first station STA1 awaits another Short Inter-Frame Space SIFS period and then proceeds to transmit a non-critical random access data frame RADF.

At and even after the start of the non-critical random access data frame RADF transmission by the first station STA1, the second station STA2 continues to withhold further transmission requests and remains bound by its refrain from initiating any transmission until after the end of its basic Network Allocation Vector B-NAV and the immediately following Distributed Inter-Frame Space DIFS period.

According to the scenario shown in FIG. 3, it is assumed that the second station STA2 transmits a Request to Send frame RTS to the access point AP immediately upon completion of the Distributed Inter-Frame Space DIFS period following the basic Network Allocation Vector B-NAV. The access point AP, after waiting for a Short Inter-Frame Space SIFS period, responds with a Clear to Send CTS frame, thereby indicating channel reservation for the second station STA2. Upon receiving the Clear to Send CTS frame from the access point AP, the second station STA2 awaits another Short Inter-Frame Space SIFS period and then proceeds to transmit a non-critical random access data frame RADF. The transmission of this non-critical random access data frame RADF may at least temporarily encroach into the scheduled access time slot SAS. In the scenario shown in FIG. 3, even the entire transmission encroaches within the scheduled access time slot SAS. Both variants of partial and complete encroachment - also referred to as overlapping - are not complying with the time-synchronized communication schedule, which stipulates strict adherence to random access time slots RAS designated for transmission of non-critical traffic and subsequent scheduled access time slots SAS exclusively designated for transmission of critical traffic.

The undesirable encroachment of the non-critical random access data frame RADF into the scheduled access time slot SAS leads not only to a violation of the time-synchronized communication schedule but additionally causes an additional delay of critical traffic DCT, symbolized in the drawing by a dotted box. Within this delay of critical traffic DCT, stations STA1, STA2, or even the access point AP itself are bound to wait with transmissions of inherently critical frames. The critical scheduled access data frame CSADF shown in the drawing may only be transmitted by the access point AP after expiration of the delay of critical traffic DCT and a subsequent Point Coordination Function Interframe Space PIFS employed by the access point AP to gain prioritized channel access.

Under normal circumstances, the temporal length of this critical scheduled access data frame CSADF would have sufficiently fit into the scheduled access time slot SAS under the desired regime of the time-synchronized communication schedule. However, due to the occurred delay of critical traffic DCT, the end of this critical scheduled access data frame CSADF extends beyond the boundary of the current slot - namely the scheduled access time slot SAS - into the subsequent slot - which is again a random access slots (RAS) - thereby causing a violation of delay requirement VDR imposed by the time-synchronized communication schedule.

The first station STA1, concurrently receiving the RTS frame on the shared wireless channel, initiates a basic Network Allocation Vector B-NAV. The countdown period in which the basic Network Allocation Vector B-NAV is active extends into the subsequent scheduled access time slots SAS designated for transmission of critical traffic. Such encroachment of a NAV in general is, however, harmless or even desirable compared to the encroaching non-critical random access data frame RADF, as the NAV leads to a desired enduring quiescence which is not able to harm the time-synchronized communication schedule between the access point AP and the one or more stations STA1, STA2.

Turning now to FIG. 4 illustrating a scheduling mechanism according to present embodiments. As noted above, neither the Basic NAV nor the SR-NAV is inherently aware of time-triggered or scheduled access mechanisms. As such they are not able to sufficiently protect deterministic or scheduled transmissions, such as those required in industrial or time-sensitive networking environments. This limitation has provided a motivation for extending the existing NAV framework in accordance with the present embodiments in order to support deterministic scheduling and reliable medium access control in time-sensitive wireless communication scenarios.

According to the present embodiments, a novel extension introducing a Real-Time Network Allocation Vector RT-NAV is proposed. The Real-Time Network Allocation Vector RT-NAV is a novel extension to the NAV mechanism, proposed to support time-triggered scheduling in mixed-criticality Wi-Fi network:
- One ore more Real-Time Network Allocation Vectors RT-NAV, RT-NAV1, RT-NAV2 may be configured by the access point AP or by one or more stations STA1, STA2. Real-Time Network Allocation Vectors RT-NAV, RT-NAV1, RT-NAV2 may be configured by the access point AP for a particular access point AP - including the Real-Time Network Allocation Vectors RT-NAV being configured by the access point AP for its own discretion - or for the one or more particular stations STA1, STA2.
- The access point AP or station configuration the Real-Time Network Allocation Vector RT-NAV, RT-NAV1, RT-NAV2 may either directly determine and assign Real-Time Network Allocation Vector values for the stations, or may distribute a transmission schedule, based on which the stations themselves determine their respective assign Real-Time Network Allocation Vector value. Alternatively or additionally, stations may autonomously determine their Real-Time Network Allocation Vector values without relying on values assigned by the access point or other stations. For such autonomous determination, a station may evaluate a transmission schedule to derive the appropriate Real-Time Network Allocation Vector value.The Real-Time Network Allocation Vectors RT-NAV, RT-NAV1, RT-NAV2 may determine and use a protection band PB, which is a time interval placed at the beginning of a scheduled access slot SAS.
- During the protection band PB, non-critical stations may be prohibited from initiating transmissions, ensuring that critical traffic scheduled in the scheduled access slot SAS slot is not disrupted.
- The transmission schedule or time-triggered / TDMA schedule may be distributed via management frames from which the individual Real-Time Network Allocation Vector values may be derived.
- One or more Real-Time Network Allocation Vectors RT-NAV, RT-NAV1, RT-NAV2 may enable deterministic protection of scheduled access slots SAS by ensuring that random access transmissions do not overlap with critical scheduled transmissions.

As can be seen in the timing diagram of FIG. 4, the protection band PB at the beginning of the scheduled access slot SAS is suppressing non-critical transmissions, thereby maintaining the integrity of the scheduled communications. This timing diagram illustrates how the embodiments effectively ensure both random and scheduled access to the wireless medium, ensuring efficient and reliable communication within the network.

FIG. 4 depicts a timing diagram illustrating a scheduling mechanism according to present embodiments, wherein scheduled access and time slots have been established as in the preceding exemplary embodiments. The key distinction in FIG. 4 is the implementation of the Real-Time Network Allocation Vector RT-NAV mechanism.

In accordance with the beginning of the preceding scenario as depicted in FIG, 3, the first station STA1 shown in FIG. 4 may await the end of a Distributed Inter-Frame Space DIFS period to ensure channel availability before initiating its communication. Upon conclusion of the interframe interval of the DIFS period, the first station STA1 may transmit a Request to Send RTS frame to the access point AP.

After a Short Inter-Frame Space SIFS period, the access point AP responds with a Clear to Send CTS frame, thereby indicating channel reservation for the first station STA1. Upon receiving the Clear to Send CTS frame from the access point AP, the first station STA1 awaits another Short Inter-Frame Space SIFS period and then proceeds to transmit a non-critical random access data frame RADF.

During this exchange, the Real-Time Network Allocation Vector mechanism according to an embodiment may now actively be employed. The access point AP may configure RT-NAV1 for the first station STA1 and RT-NAV2 for the second station STA2, thereby establishing protected time intervals extending through the protection band PB at the beginning of the scheduled access time slot SAS.

Only transmissions of critical traffic are thereby permitted during the protection band PB that temporarily overlaps into the scheduled access time slot SAS. This selective permission ensures prioritization of critical communications while maintaining temporal boundaries of the scheduled access periods.

The Network Allocation Vector RT-NAV is activated to effectuate prevention of stations STA2 from initiating both non-critical and critical traffic transmissions within the random access time slot RAS that extends into the scheduled access time slot SAS.

The Network Allocation Vector RT-NAV may implement a granular control by specifying, on a per-station basis, which stations STA1 and STA2 are permitted to contend for channel access. Such specification enables precise management of channel access rights among participating stations.

The Network Allocation Vector RT-NAV may impose a timer during which the first station (STA1) is restricted from transmitting traffic. A duration of this timer, as imposed by Network Allocation Vectors RT-NAV, RT-NAV1, RT-NAV2 may differ for different stations (STA1, STA2). In other words, the duration, as imposed by Network Allocation Vectors RT-NAV, RT-NAV1, RT-NAV2 may be set on a per-station basis. In particular, the duration may differ depending on whether a station is designated for critical or non-critical traffic. Furthermore, the designation of a station as handling critical or non-critical traffic may change over time or from one time slot to another time slot.

According to an embodiment, transmissions from stations STA1, STA2 designated for non-critical traffic are restricted during the protection band PB, thereby effectuating regulated channel access at the onset of the scheduled access time slot SAS. This restriction mechanism serves to prevent potential interference with critical transmissions.

According to an embodiment, stations STA1, STA2 designated for non-critical traffic may be prohibited from initiating transmissions during a time interval immediately preceding the protection band PB when said transmission cannot be completed prior to the protection band PB commencement.

According to an embodiment, restriction of the station STA1 from transmitting traffic may be dynamically enforced based on an estimated duration of pending transmissions in relation to the remaining time before the protection band PB.

According to an embodiment, Network Allocation Vectors RT-NAV1, RT-NAV2 may extend into the scheduled access time slot SAS when the station STA1, STA2 involved in the transmission is designated for non-critical traffic. According to an embodiment, the Network Allocation Vector RT-NAV timer does not extend into the scheduled access time slot SAS when stations STA1, STA2 or the access point AP are designated for transmission of critical traffic.

According to an embodiment, the time-triggered communication schedule may be conveyed to stations STA1, STA2 through management frames. According to an embodiment, said time-triggered communication schedule may be initially configured at the access point AP and subsequently distributed to stations STA1, STA2 associated therewith. This embodiment facilitates synchronized network behavior through centralized schedule management. The time-triggered or TDMA schedule may be distributed via management frames from which the individual Real-Time Network Allocation Vector values may be derived, or, Real-Time Network Allocation Vector values of individual stations may be derived from said schedule.

According to an embodiment, the protection band PB may be adjusted as the time interval between the timer of the Network Allocation Vector RT-NAV set for at least one station STA1, STA2 designated for non-critical traffic and the timer of the Network Allocation Vector RT-NAV set for at least one other station (STA1, STA2) designated for critical traffic.

According to an embodiment, the time interval of the protection band PB may be distinctly assigned to different stations STA1 and STA2, with each station being allocated a unique protection band PB based on its specific traffic and scheduling characteristics. The implementation enables tailored protection periods that accommodate varying transmission requirements among different stations.

Unlike the scenario heretofore depicted in FIG. 3, the Real-Time Network Allocation Vectors RT-NAV1 and RT-NAV2 prevent any encroachment of non-critical transmissions into the scheduled access time slot SAS. The Real-Time Network Allocation Vector RT-NAV precludes the access point AP administering critical traffic from participating in or initiating a data frame transmission after the transmission of the non-critical random access data frame RADF has concluded. The Real-Time Network Allocation Vector RT-NAV precludes also stations administering critical traffic from participating in or initiating a data frame transmission after the transmission of the non-critical random access data frame RADF has concluded. The Real-Time Network Allocation Vector RT-NAV, however, does not extend into the neighboring scheduled access time slot SAS, thereby facilitating an unimpeded immediate initiation of critical data traffic transmission. As exemplarily illustrated in FIG. 4, subsequent to a Distributed Inter-Frame Space DIFS period, the access point AP is enabled to forthwith transmit a scheduled access data frame SADF within the scheduled access time slot SAS designated for critical transmissions. Whereas critical transmissions are permitted to commence immediately - subject solely to the brief DIFS period - non-critical transmissions are effectively barred by virtue of the protection band PB included in the Real-Time Network Allocation Vectors RT-NAV1 and RT-NAV2, said protection band PB maintaining its active state until the commencement of the scheduled access data frame SADF transmission.

The timing diagram in FIG. 4 illustrates how the Real-Time Network Allocation Vector RT-NAV mechanism, in conjunction with the protection band PB, may successfully maintain the integrity of the time-triggered communication schedule. This is evidenced by the absence of both delay of critical traffic DCT and violation of delay requirement VDR, which had proven problematic in the scenario shown in FIG. 3.

The proposed embodiments present distinct advantages over the prior art in wireless network scheduling. Whereas Time-Sensitive Networking employing Time-Aware Shaper (TAS) guard band mechanisms - whilst established in wired networks - cannot be feasibly implemented in Wireless Fidelity (Wi-Fi) networks due to the absence of transmission control gates for priority-specific queues, the present disclosure provides means for achieving synchronized network behavior without being subject to the previous limitations inherent to Wi-Fi networks.

Traditional prioritization mechanisms have shown limitations. The Point Coordination Function (PCF) is considered obsolete, whilst the Enhanced Distributed Channel Access (EDCA) - though more current - cannot provide guaranteed channel access due to its inherent probabilistic nature in managing channel access. A utilization of a known restricted Target Wake Time (rTWT) Quiet Element, though present in current Wi-Fi standards, serves a different purpose and is primarily designed for channel sounding and measurements rather than traffic scheduling and channel access control.

The proposed embodiments, in turn, exhibit several advantages over the prior art. The embodiments operate independently of optional IEEE 802.11 mechanisms, thus ensuring broader compatibility. The disclosed technology safeguards Scheduled Access (SA) slots from potential interference by non-critical traffic, thereby ensuring adherence to strict latency requirements. Moreover, the embodiments maintain efficient bandwidth utilization in Random Access (RA) slots, accommodating both non-critical and non-periodic traffic types. The modifications disclosed herein extend beyond IEEE 802.11ax, IEEE 802.11be, IEEE 802.11bn specifications to facilitate robust support for time-sensitive traffic.

In summary, the proposed embodiments relate to a method for protecting scheduled access time slots in a wireless communication network, which includes an access point and one or more stations. The network operates on a time-triggered communication schedule that alternates between scheduled access time slots for critical traffic and random access time slots for non-critical traffic. According to a proposed method a protection band within a scheduled access time slot is configured. This protection band defines a time interval during which transmissions of non-critical traffic are suppressed. Additionally, within a random access time slot, a Network Allocation Vector is activated at a first station in response to a transmission. This Network Allocation Vector imposes a timer that restricts the station from transmitting until the random access time slot concludes. If the first station is designated for non-critical traffic, the timer is extended by the protection band, ensuring that the Network Allocation Vector remains active into the subsequent scheduled access time slot. The proposed embodiments ensure that critical traffic may be transmitted without interruption during its designated time slots.

It is to be understood that the elements and features recited in the appended claims may be combined in different ways to produce new claims that likewise fall within the scope of the present invention. Thus, whereas the dependent claims appended below depend from only a single independent or dependent claim, it is to be understood that these dependent claims can, alternatively, be made to depend in the alternative from any preceding or following claim, whether independent or dependent, and that such new combinations are to be understood as forming a part of the present specification.

While the present invention has been described above by reference to various embodiments, it should be understood that many changes and modifications can be made to the described embodiments. It is therefore intended that the foregoing description be regarded as illustrative rather than limiting, and that it be understood that all equivalents and/or combinations of embodiments are intended to be included in this description.

## Claims

1. A method for protecting scheduled access time slots in a wireless communication network including an access point (AP) and one or more stations (STA1, STA2), wherein
- the access point (AP) is at least temporarily occupying channel access for an Orthogonal Frequency Division Multiple Access transmission;
- the wireless communication network is operated according to a time-triggered communication schedule between the access point (AP) and the one or more stations (STA1, STA2), and;
- the time-triggered communication schedule comprises alternating scheduled access time slots (SAS) designated for transmission of critical traffic and random access time slots (RAS) designated for transmission of non-critical traffic;
the method including the steps of:
- configuring a protection band (PB) defining a time interval within one of the scheduled access time slot (SAS) during which transmissions of non-critical traffic are to be suppressed; and;
- activating, within one of the random access time slots (RAS), a Network Allocation Vector (RT-NAV) at a first station (STA1) in response to a transmission in the one or more stations (STA1, STA2), the Network Allocation Vector (RT-NAV) imposing a timer during which the first station (STA1) is restricted from transmitting traffic until the random access time slot (RAS) is concluded, wherein the timer of the Network Allocation Vector (RT-NAV) is extended by the protection band (PB) in a case where the first station (STA1) is designated for transmission of non-critical traffic, such that the Network Allocation Vector (RT-NAV) remains active into the subsequent scheduled access time slot (SAS).

2. The method according to claim 1, including the step of permitting only critical traffic for transmission during the protection band (PB) temporarily overlapping into the scheduled access time slot (SAS).

3. The method according to one of the aforementioned claims, including the step of activating the Network Allocation Vector (RT-NAV), to prevent stations (STA2) from initiating non-critical and/or critical traffic transmissions inside the random access time slot (RAS) extending into the scheduled access time slot (SAS).

4. The method according to one of the aforementioned claims, including specifying, by the Network Allocation Vector (RT-NAV), on a per-station basis, which stations (STA1, STA2) are permitted to contend for channel access.

5. The method according to one of the aforementioned claims, including the step of restricting transmissions from one or more stations (STA1, STA2) designated for non-critical traffic during the protection band (PB), thereby regulating channel access at the onset of the scheduled access time slot (SAS).

6. The method according to one of the aforementioned claims, wherein one or more stations (STA1, STA2) designated for non-critical traffic are prohibited from initiating transmissions during a time interval immediately preceding the protection band if the transmission cannot be completed before the start of the protection band (PB).

7. The method according to one of the aforementioned claims, wherein restricting the first station (STA1) from transmitting traffic is enforced dynamically based on an estimated duration of pending transmissions relative to the remaining time before the protection band (PB).

8. The method according to one of the aforementioned claims, wherein in the case where the first station (STA1) is designated for transmission of non-critical traffic, the timer of the Network Allocation Vector (RT-NAV) extends into the scheduled access time slot (SAS).

9. The method according to one of the aforementioned claims, wherein in the case where one or more stations (STA1, STA2) and/or the access point (AP) are designated for transmission of critical traffic, the timer of the Network Allocation Vector (RT-NAV) does not extend into the scheduled access time slot (SAS).

10. The method according to one of the aforementioned claims, further comprising informing stations (STAs) of the time-triggered communication schedule using management frames, the time-triggered communication being configured at the access point (AP) and subsequently distributed to the one or more stations (STA1, STA2) associated with the access point (AP).

11. The method according to one of the aforementioned claims, wherein the protection band (PB) is adjusted as the time interval between the timer of the Network Allocation Vector (RT-NAV1, RT-NAV2) set for at least one station (STA1, STA2) designated for non-critical traffic and the timer of the Network Allocation Vector (RT-NAV) set for at least one other station (STA1, STA2) designated for critical traffic.

12. The method according to one of the aforementioned claims, wherein the time interval of the protection band (PB) assigned to different one of the at least one stations (STA1, STA2) differ from each other.

13. The method of any of the preceding claims, wherein the time interval of the protection band (PB) assigned to each of the at least one station (STA1, STA2) differs, such that each of the at least one station (STA1, STA2) is allocated a distinct protection band (PB) based on its traffic or scheduling characteristics.

14. The method of any of the preceding claims, wherein time synchronization between the access point (AP) and said one or more stations (STA1, STA2) is effectuated utilizing a wireless timing protocol selected from at least one protocol family pertaining to Fine Timing Measurement and/or Precision Time Protocol, including respective successors of said at least one protocol family.

15. The method of any of the preceding claims, wherein the wireless communication network operates in accordance with one or more of an IEEE 802.11 standard family.

16. The method of any of the preceding claims, including dynamically adjusting a duration of the time interval of the protection band (PB) responsive to transmission characteristics of buffered data at said one or more stations (STA1, STA2).
